# EUROPÄISCHE PATENTSCHRIFT

(11) **EP 2 418 168 B1**
(45) Veröffentlichungstag und Bekanntmachung des Hinweises auf die Patenterteilung: **01.05.2013**
(21) Anmeldenummer: 11174602.0
(22) Anmeldetag: 20.07.2011
(51) Int. Cl.: B67D 7/32

(54) **Entnahmearmatur für einen Transport- und Lagerbehälter für Flüssigkeiten sowie Transport- und Lagerbehälter mit einer solchen Entnahmearmatur**
Removal fitting for a transport and storage container for liquids and transport and storage container with such a removal fitting
Armature de prélèvement pour un conteneur de transport et de stockage pour fluides ainsi que conteneur de transport et de stockage doté d'une telle armature de prélèvement

(30) Priorität: 13.08.2010 DE 102010039328
(43) Veröffentlichungstag der Anmeldung: 15.02.2012
(73) Patentinhaber: PROTECHNA S.A., 1701 Fribourg (CH)
(72) Erfinder:
(74) Vertreter: advotec.

(56) Entgegenhaltungen:
- EP-A1- 2 008 946
- DE-A1- 10 242 954

## Beschreibung

Die vorliegende Erfindung betrifft eine Entnahmearmatur gemäß dem Oberbegriff des Anspruchs 1. Des Weiteren betrifft die vorliegende Erfindung einen mit einer solchen Entnahmearmatur versehen Transport- und Lagerbehälter für Flüssigkeiten.

Flüssigkeitsbehälter aus Kunststoff werden vielfach als Transport- und Lagerbehälter für Flüssigkeiten verwendet, die explosive Inhaltsstoffe aufweisen können bzw. explosive oder leicht entzündliche Gase im Flüssigkeitsbehälter bilden können. Bei der Befüllung oder der Entleerung derartiger Flüssigkeitsbehälter kann es aufgrund der Reibung zwischen der Flüssigkeit und der Hülle des Flüssigkeitsbehälters zu Ausbildung elektrostatischer Ladungen kommen, die zu einer Entzündung der Flüssigkeit bzw, der durch die Flüssigkeit gebildeten Gase führen können.

Um sicherzustellen, dass es nicht zu einer derartigen Entzündung kommen kann, wird im Stand der Technik die Ableitung der elektrostatischen Ladung durch geeignete Maßnahmen am Flüssigkeitsbehälter bzw. der Entnahmearmatur vorgeschlagen. Hierzu zeigt die EP 2 008 946 A1 eine Anordnung einer Entnahmearmatur an einem Flüssigkeitsbehälter, der mit einem Ablaufstutzen versehen ist, derart, dass zwischen dem Ablaufstutzen und der Entnahmearmatur ein Einsatzstutzen aus elektrisch leitendem Kunststoffmaterial vorgesehen ist, der mit einem zylindrischem Teil zwischen einer Innenwandung des Ablaufstutzens und einer Außenwandung eines Einlaufstutzens der Entnahmearmatur eingesetzt ist und mit einem Flanschrand die Entnahmearmatur radial überragt, um bei der Montage der Entnahmearmatur eine Schweißverbindung zwischen dem Ablaufstutzen des Flüssigkeitsbehälters und dem Einsatzstutzen einerseits und dem Einsatzstutzen und der Entnahmearmatur andererseits herstellen zu können. Zur elektrisch leitenden Verbindung des Einsatzstutzens mit einem Erdungspotential ist ein unabhängig vom Einsatzstutzen ausgebildeter elektrischer Leiter vorgesehen.

Die aus der EP 2 008 946 A1 bekannte Anordnung erfordert eine entsprechende Handhabung des Einsatzstutzens während der Montage der Entnahmearmatur am Ablaufstutzen des Flüssigkeitsbehälters. Darüber hinaus ergibt sich eine stoffschlüssige und damit gut leitende Verbindung zwischen der Entnahmearmatur und dem Einsatzstutzen lediglich in den Bereichen, in denen tatsächlich die Schweißverbindung erfolgt und zusätzlich zur Notwendigkeit eines weiteren Montageschritts zum Anschluss des separat ausgebildeten elektrischen Leiters an den Einsatzstutzen befindet sich eine Kontaktfläche für einen Flüssigkeitskontakt des Einsatzstutzens aufgrund dessen Anordnung zwischen der Innenwandung des Ablaufstutzens und der Außenwandung des Einlaufstutzens der Entnahmearmatur im Bereich eines in der Entnahmearmatur ausgebildeten Strömungshindernisses.

Der vorliegenden Erfindung liegt daher die Aufgabe zugrunde, eine sichere Ableitung einer elektrostatischen Aufladung von einer Entnahmearmatur zu ermöglichen, die einerseits keinen zusätzlichen Aufwand bei der Montage der Entnahmearmatur am Flüssigkeitsbehälter erfordert, und zum anderen eine besonders wirksame Ableitung elektrostatischer Aufladung ermöglicht, ohne in der Entnahmearmatur ein Strömungshindernis auszubilden. Darüber hinaus liegt der Erfindung die Aufgabe zugrunde, einen Transport- und Lagerbehälter für Flüssigkeiten vorzuschlagen, der eine erhöhte Betriebssicherheit aufweist.

Zur Lösung der Aufgabe weist die erfindungsgemäße Entnahmearmatur die Merkmale des Anspruchs 1 auf. Der erfindungsgemäße Transport- und Lagerbehälter weist zur Lösung der Aufgabe die Merkmale des Anspruchs 9 auf.

Bei der erfindungsgemäßen Entnahmearmatur weist die Leiteinrichtung sowohl einen integral ausgebildeten Erdungsleiter zur elektrisch leitfähigen Verbindung der Leiteinrichtung mit einem Erdungspotential auf. Andererseits ist die Leiteinrichtung integral mit dem Armaturengehäuse verbunden.

Aufgrund der integralen Verbindung der Leiteinrichtung mit dem Armaturengehäuse ist eine separate Handhabung der Leiteinrichtung während des Anbaus bzw. der Montage der Entnahmearmatur am Flüssigkeitsbehälter nicht notwendig. Darüber wird durch die integrale Ausgestaltung die Ausbildung unerwünschter Übergangswiderstände zwischen der Leiteinrichtung und dem Armaturengehäuse, die bei einer unvollständigen bzw. unsachgemäß ausgeführten Verbindung der Leiteinrichtung mit dem Armaturengehäuse bei der Montage entstehen können, vermieden. Die integrale Ausbildung des Erdungsleiters mit der Leiteinrichtung stellt ebenfalls sicher, das unerwünschte Übertragungswiderstände zwischen der Leiteinrichtung und dem Erdungsleiter, die die Effektivität der Ableitung elektrostatischer Aufladung nachteilig beeinträchtigen könnten, nicht auftreten können.

Bei der erfindungsgemäßen Entnahme-armatur bildet ein Segmentkörper der Leiteinrichtung ein Wandsegment einer einen Durchflusskanal des Armaturengehäuses definierenden Kanalwandung aus, mit einer exponiert auf einer Innenseite der Kanalwandung angeordneten Kontaktfläche des Segmentkörpers, der mit einer Anschlussfläche, an die der Erdungsleiter stoffschlüssig angeschlossen ist, in einer äußeren Oberfläche der Kanalwandung angeordnet ist.

Es befindet sich somit die Leiteinrichtung in unmittelbarem Kontakt mit der im Flüssigkeitsbehälter aufgenommen Flüssigkeit, so dass für eine besonders effektive unmittelbare Ableitung der elektrostatischen Aufladung aus der Flüssigkeit gesorgt ist. Der Anschluss des Erdungsleiters an die in der äußeren Oberfläche der Kanalwandung angeordnete Anschlussfläche des Segmentkörpers sorgt dafür, dass jederzeit leicht eine optische Kontrolle der wirksamen elektrischen Verbindung zwischen dem Anschlussleiter und dem Segmentkörper möglich ist.

Wenn gemäß einer bevorzugten Ausführungsform die Leiteinrichtung einen ringförmigen Segmentkörper aufweist, der derart in einer Kanalwandung angeordnet ist, dass die Anschlussfläche an der Außenseite der Kanalwandung angeordnet ist und eine Vielzahl von radial verteilt angeordneten, die Kontaktfläche ausbildenden Kontaktfortsätze die Kanalwandung durchdringen, wird einerseits eine über den Umfang der Kanalwandung gleichmäßig erfolgende elektrostatische Ableitung ermöglicht. Darüber hinaus ist eine nicht nur stoffschlüssige sondern auch formschlüssige Verbindung zwischen dem Segmentkörper und der Kanalwandung aufgrund der die Kanalwandung durchdringenden Ausbildung der Kontaktfortsätze des Segmentkörpers gegeben.

Bei einer weiteren bevorzugten Ausführungsform weist die Leiteinrichtung einen ringförmigen Segmentkörper auf, der in einem ringförmigen Rezess der Kanalwandung angeordnet ist, wobei die Anschlussfläche auf einem Boden des Rezesses angeordnet ist und der Erdungsleiter die Kanalwandung nach außen durchdringt.

Bei dieser Ausführungsform ist ein über den Umfang der Kanalwandung vollständiger Kontakt zwischen der Flüssigkeit und der Leiteinrichtung ermöglicht. Trotz dieses vollständigen Kontakts ist jedoch das äußere Erscheinungsbild des Armaturengehäuse nicht durch den Segmentkörper beeinflusst, so dass für eine individuelle äußere Gestaltung des Armaturengehäuses, beispielsweise im Rahmen einer Unternehmenskennzeichnung durch das den Flüssigkeitsbehälter verwendende Unternehmen, eine neutrale und einheitlich gestaltete Oberfläche des Armaturengehäuses zur Verfügung steht.

Die besonders einfache Herstellung eines mit einer Leiteinrichtung versehenen Armaturengehäuses wird möglich, wenn die Leiteinrichtung mit ihrem Segmentkörper einen Wandabschnitt der Kanalwandung ausbildet, so dass in einem Herstellungsverfahren bei dem von der sogenannten "2K-Technologie" in einer Spritzgießmaschine Gebrauch gemacht wird, die Form zur Herstellung des Armaturengehäuses besonders einfach gestaltet sein kann. Dies gilt insbesondere dann, wenn der Segmentkörper ringförmig ausgebildet ist.

Wenn bei einer weiteren Ausführungsform der Segmentkörper als Übergangsstück zwischen zwei Gehäuseabschnitten des Armaturengehäuses ausgebildet ist, wird zum einen eine besonders wirksame Ausgestaltung der Leiteinrichtung ermöglicht, zum andern befindet sich der integral mit dem Segmentkörper ausgebildete Erdungsleiter in einem gut zugänglichen Bereich des Armaturengehäuses, so dass der Anschluss des Erdungsleiters an ein Erdungspotential komfortabel herstellbar ist.

Alternativ ist es auch möglich, den Segmentkörper als stoffschlüssigen Fortsatz eines Anschlussendes des Armaturengehäuses auszubilden, um bei Bedarf die Leiteinrichtung möglichst dicht benachbart zum Entleerstutzen des Flüssigkeitsbehälters anordnen zu können.

Besonders vorteilhaft ist es, wenn der Fortsatz gleichzeitig einen Anschlussflansch zur Schweißverbindung des Armaturengehäuses mit dem Entleerstutzen des Flüssigkeitsbehälters bildet, so dass Segmentkörper eine vorteilhafte Doppelfunktion, nämlich elektrisch ableiten und mechanisch verbinden, zukommt.

Der erfindungsgemäß ausgestaltete Transport- und Lagerbehälter für Flüssigkeiten nach Anspruch 9 ermöglicht aufgrund der Entnahmearmatur eine funktionssichere Ableitung einer elektrostatischen Aufladung vom Flüssigkeitsbehälter und ermöglicht somit eine erhöhte Betriebssicherheit.

Nachfolgend werden Ausführungsbeispiele der Erfindung anhand der Zeichnung näher erläutert. Es zeigen:
- **Fig. 1**: eine perspektivische Darstellung eines Transport- und Lagerbehälters für Flüssigkeiten;
- **Fig. 2**: eine perspektivische Darstellung einer Entnahmearmatur mit einer in einem Einlaufstutzen eines Armaturengehäuses angeordneten Leiteinrichtung gemäß einer ersten Ausführungsform;
- **Fig. 3**: den Einlaufstutzen des in **Fig. 2** dargestellten Armaturengehäuses;
- **Fig. 4**: eine Schnittdarstellung der in Fig. 3 dargestellten Leiteinrichtung gemäß Schnittlinienverlauf IV-IV;
- **Fig. 5**: eine Schnittdarstellung der in **Fig. 3** dargestellten Leiteinrichtung gemäß Schnittlinienverlauf V-V;
- **Fig. 6**: eine weitere Ausführungsform einer in einem Einlaufstutzen eines Armaturengehäuses ausgebildeten Leiteinrichtung;
- **Fig. 7**: die in **Fig. 6** dargestellte Leiteinrichtung in einer Schnittdarstellung gemäß Schnittlinienverlauf VII-VII;
- **Fig. 8**: die in **Fig. 6** dargestellte Leiteinrichtung in einer Schnittdarstellung gemäß Schnittlinienverlauf VIII-VIII;
- **Fig.9**: den Einlaufstutzen eines Armaturengehäuses mit einer weiteren Ausführungsform einer Leiteinrichtung;
- **Fig. 10**: die in **Fig. 9** dargestellte Leiteinrichtung in einer Schnittdarstellung gemäß Schnittlinienverlauf X-X.
- **Fig. 11**: die in **Fig. 9** dargestellte Leiteinrichtung in einer Schnittdarstellung gemäß Schnittlinienverlauf XI-XI;
- **Fig. 12**: den Einlaufstutzen eines Armaturengehäuses mit einer weiteren Ausführungsform einer Leiteinrichtung;
- **Fig. 13**: die in **Fig. 12** dargestellte Leiteinrichtung in einer Schnittdarstellung gemäß Schnittlinienverlauf XIII-XIII;
- **Fig. 14**: die in **Fig. 12** dargestellte Leiteinrichtung in einer Schnittdarstellung gemäß Schnittlinienverlauf XIV-XIV;
- **Fig. 15**: den Einlaufstutzen eines Armaturengehäuses mit einer weiteren Ausführungsform einer Leiteinrichtung;
- **Fig. 16**: die in **Fig. 15** dargestellte Leiteinrichtung in einer Schnittdarstellung gemäß Schnittlinienverlauf XVI-XVI;
- **Fig. 17**: die in **Fig. 15** dargestellte Leiteinrichtung in einer Schnittdarstellung gemäß Schnittlinienverlauf XVII-XVII;
- **Fig. 18**: eine weitere Ausführungsform einer in einem Einlaufstutzen eines Armaturengehäuses angeordneten Leiteinrichtung in perspektivischer Darstellung;
- **Fig. 19**: eine weitere Ausführungsform einer in einem Einlaufstutzen eines Armaturengehäuses angeordneten Leiteinrichtung in perspektivischer Darstellung;

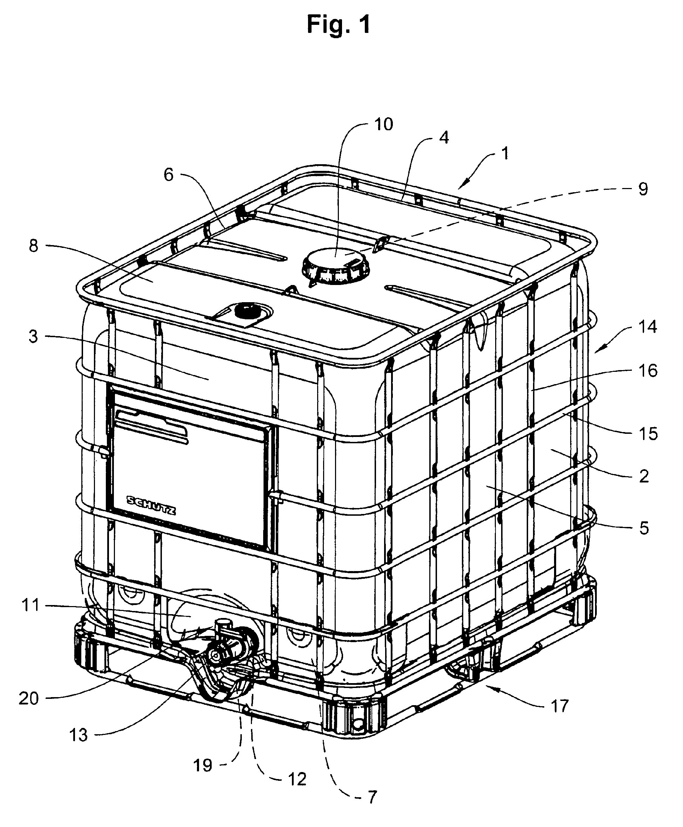

**Fig. 1** zeigt einen als Einweg- und Mehrwegbehälter einsetzbaren Transport- und Lagerbehälter 1 für Flüssigkeiten, der einen austauschbaren, quaderförmigen Innenbehälter 2 aus Kunststoff aufweist mit einer Stirnwand 3, einer Rückwand 4 und zwei Seitenwänden 5, 6, einem unteren als Ablaufboden ausgebildeten Boden 7 und einem oberen Boden 8, einem an diesen angeformten, mit einem Deckel 10 verschließbaren Einfüllstutzen 9 und einem an einer Einwölbung 11 im unteren Abschnitt der Stirnwand 3 des Innenbehälters 2 angeformten Entleerstutzen 12. Der Entleerstutzen 12 ist mit dem Innenbehälter 2 einteilig durch Blasformen hergestellt ist. Der Entleerstutzen 12 dient zur Anbringung einer Entnahmearmatur 13, insbesondere eines Kugel- oder Klappenhahns. Der Innenbehälter 2 ist in einem als Gittermantel ausgebildeten Außenmantel 14 mit sich kreuzenden horizontalen und vertikalen Gitterstäben 15, 16 aus Metall aufgenommen und auf einem palettenartigen Untergestell 17 angeordnet.

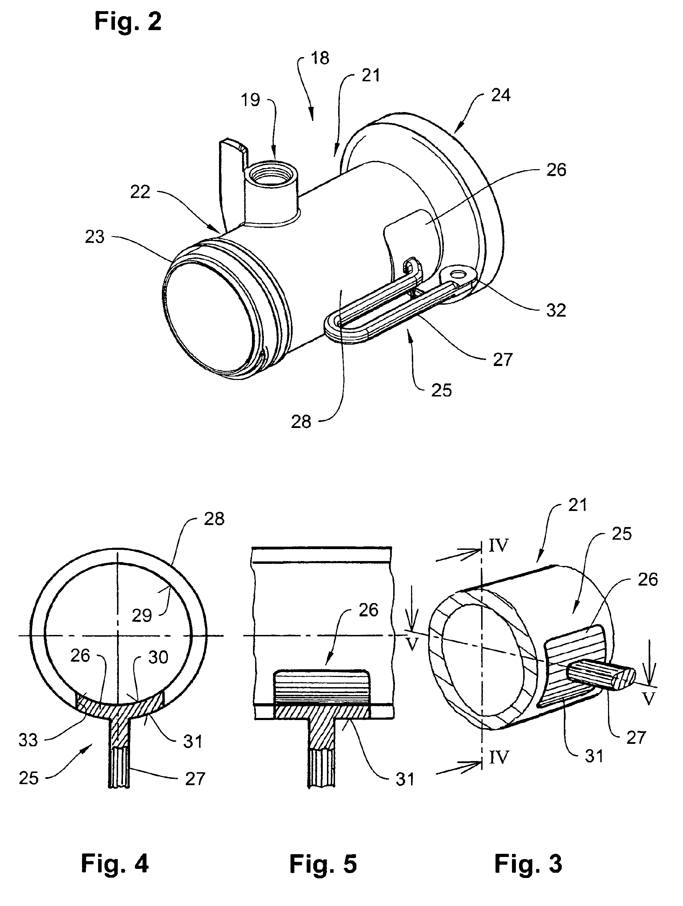

Die Entnahmearmatur 13 weist ein beispielhaft in **Fig. 2** dargestelltes Armaturengehäuse 18 auf, das vorzugsweise aus einem Polyethylen hoher Dichte (PE-HD) spritzgegossen ist und im mittleren Ventilabschnitt 19 eine in **Fig. 1** dargestellte Ventileinrichtung 20 mit Absperrfunktion aufweist, die einen Einlaufstutzen 21 von einem Auslaufstutzen 22 trennt, der im Fall des in **Fig. 2** dargestellten Armaturengehäuses 18 mit einem Gewindeende 23 zur Anbringung einer hier nicht näher dargestellten Verschlusskappe versehen ist.

Wie ferner **Fig. 2** zu entnehmen ist, weist das Armaturengehäuse 18 am Ende des Einlaufstutzens 21 einen als Schweißflansch ausgebildeten Anschlussflansch 24 auf, der vorzugsweise durch Spiegelschweißen an den Entleerstutzen 12 des Innenbehälters 2 angebracht ist.

Das aus einem elektrisch nicht leitenden Kunststoff, wie zum Beispiel Polyethylen, im Spritzgießverfahren hergestellte Armaturengehäuse 18 weist im Bereich seines Einlaufstutzens 21 eine Leiteinrichtung 25 auf, die, wie in den **Fign. 3 bis 5** im Einzelnen dargestellt, einen Segmentkörper 26 aufweist, an dem integral ein Erdungsleiter 27 ausgebildet ist. Der Segmentkörper 26 und der Erdungsleiter 27 bestehen aus einem elektrisch leitenden Kunststoff, beispielsweise Polyethylen, das mit elektrisch leitenden Kohlenstoff-Nanopartikeln versetzt ist. Wie insbesondere den **Fign. 4 und 5** zu entnehmen ist, bildet der Segmentkörper 26 ein Wandsegment einer Kanalwandung 28 des Einlaufstutzens 21. Dabei bildet eine auf einer Innenseite 29 der Kanalwandung 28 angeordnete Kontaktfläche 30 eine unmittelbare Übergangsfläche zwischen einer längs der Kanalwandung 28 strömenden beziehungsweise an der Kanalwandung 28 anstehenden, hier nicht näher dargestellten Flüssigkeit und der Leiteinrichtung 25. Auf der Außenseite der Kanalwandung 28 des Einlaufstutzens 21 befindet sich eine Anschlussfläche 31 des Segmentkörpers 26, an die integral ausbildet der Erdungsleiter 27 anschließt. Aufgrund der stoffschlüssigen Verbindung zwischen dem Erdungsleiter 27 und dem Segmentkörper 26 ist eine besonders elektrisch leitfähige Verbindung zwischen der Kontaktfläche 29 des Segmentkörpers 26 und dem Erdungsleiter 27 beziehungsweise einem an einem Anschlussende 32 **(****Fig. 2****),** das im vorliegenden Fall durch eine Anschraublasche gebildet ist und einem hier nicht näher dargestellten Erdungspotential gegeben.

Die in den **Fign. 2 bis 5** dargestellte Leiteinrichtung 25 wird nach der 2K-Technologie mit einer Spritzgießmaschine hergestellt, derart, dass in einem ersten Verfahrensschritt das Armaturengehäuse 18 mit einer Ausnehmung 33 in der Kanalwandung 28 im Bereich des Einlaufstutzens 21 aus einem elektrisch nicht leitenden Kunststoffmaterial, beispielsweise einem Polyethylen hoher Dichte (PE-HD), spritzgegossen wird. Anschließend kann mit derselben Spritzgießmaschine in einem zweiten Verfahrensschritt ein elektrisch leitendes Kunststoffmaterial, beispielsweise ein mit Kohlenstoff-Nanopartikeln versetztes Polyethylen, zur Herstellung der Leiteinrichtung 25 mit dem integral am Segmentkörper 26 ausgebildeten Erdungsleiter 27 an das zuvor hergestellte Armaturengehäuse 18 im Bereich der Ausnehmung 33 angespritzt werden.

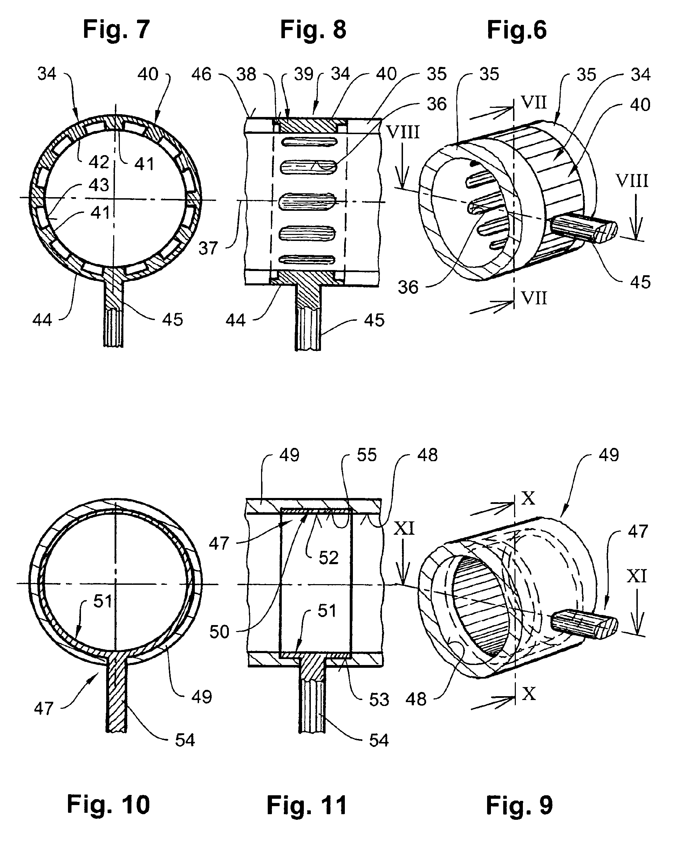

In den **Fign. 6 bis 8** ist eine alternativ zu der in den **Fign. 2 bis 5** dargestellten Leiteinrichtung 25 ausgebildete Leiteinrichtung 34 dargestellt, die in eine Kanalwandung 35 des Armaturengehäuses 18 im Bereich des Einlaufstutzens 21 integriert ist. Im vorliegenden Fall ist die Kanalwandung 35 so ausgebildet, dass sie im Bereich des Einlaufstutzens 21 über den Umfang radial verteilt angeordnete Ausnehmungen 36 aufweist, die bezogen auf eine Längsachse oder Strömungsachse 37 als parallele Längsschlitze ausgebildet sind. Die Ausnehmungen 36 befinden sich darüber hinaus in einem Boden 38 einer über den Umfang der Kanalwandung 35 umlaufend ausgebildeten Aufnahme 39, in der die Leiteinrichtung 34 aufgenommen ist, derart, dass an einem Segmentkörper 40 ausgebildete Kontaktfortsätze 41 die Kanalwandung 35 durchdringen und mit Kontaktflächen 42 auf einer Innenseite 43 der Kanalwandung 35 angeordnet sind.

Mit seiner Anschlussfläche 44, an der integral ein Erdungsleiter 45 angeordnet ist, erstreckt sich der Segmentkörper 40 an einer Außenseite 46 der Kanalwandung 35.

Wie bereits unter Bezugnahme auf die **Fign. 2 bis 5** ausgeführt, erfolgt auch die Ausbildung der Leiteinrichtung 34 in der Kanalwandung 35 in 2K-Technologie, so dass in einem ersten Verfahrensschritt die Kanalwandung 35 hergestellt wird und in einem nachfolgenden zweiten Verfahrensschritt die Leiteinrichtung 34 an die Kanalwandung 35 angespritzt wird.

In den **Fign. 9 bis 11** ist in einer weiteren alternativen Ausführungsform eine Leiteinrichtung 47 dargestellt, die auf einer Innenseite 48 einer Kanalwandung 49 angeordnet ist. Hierzu ist an der Innenseite 48 der Kanalwandung 49 eine radial umlaufend ausgebildete Aufnahme 50 vorgesehen, in der ein Segmentkörper 51 der Leiteinrichtung 47 so angeordnet ist, dass sich eine Kontaktfläche 52 des Segmentkörpers 51 auf der Innenseite 48 befindet und eine Anschlussfläche 53 auf einem Boden 54 der in der Kanalwandung 49 ausgebildeten Aufnahme 50 angeordnet ist.

Wie insbesondere die **Fign. 10 und 11** deutlich zeigen, ist an die Anschlussfläche 53 integral angeschlossen ein Erdungsleiter 54 ausgebildet, der die Kanalwandung 49 nach außen durchdringt.

Wie vorstehend beschrieben erfolgt die Ausbildung beziehungsweise Anordnung der Leiteinrichtung 47 in der Kanalwandung 49 entsprechend der 2K-Technologie.

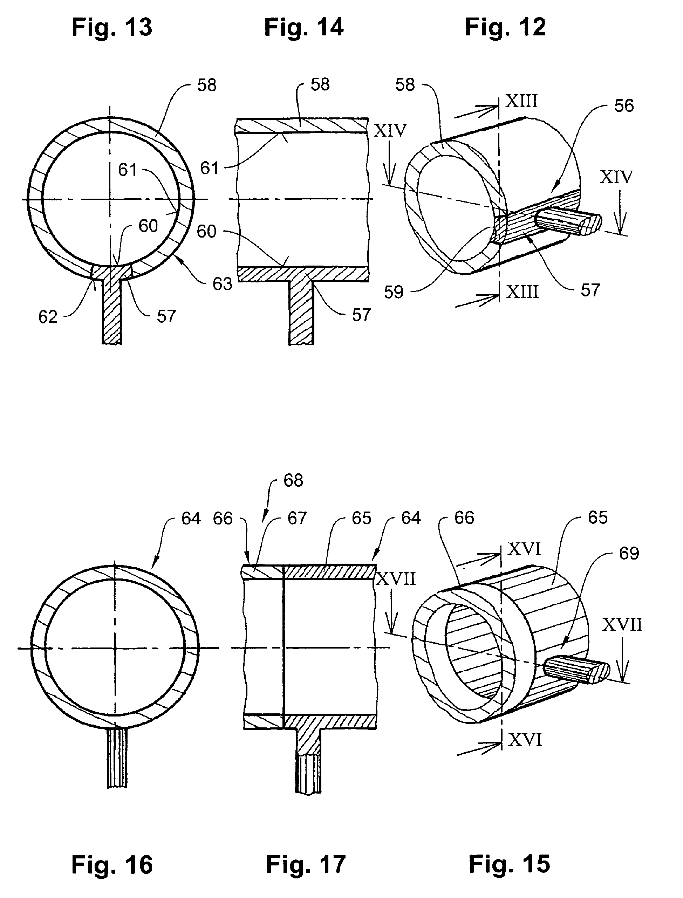

In den **Fign. 12 bis 14** ist eine Leiteinrichtung 56 dargestellt, die einen Segmentkörper 57 aufweist, der ein Wandsegment einer Kanalwandung 58 bildet. Hierzu weist die Kanalwandung 58 eine in der Kanalwandung 58 als schlitzförmige Ausnehmung ausgebildete Aufnahme 59 auf, die komplementär durch den Segmentkörper 57 ergänzt wird. Somit befindet sich eine Kontaktfläche 60 des Segmentkörpers 57 auf einer Innenseite 61 der Kanalwandung 58 und eine Anschlussfläche 62 des Segmentkörpers 57 bildet einen Teil einer Außenseite 63 der Kanalwandung 58.

In den **Fign. 15 bis 18** ist eine Leiteinrichtung 64 dargestellt, die einen Segmentkörper 65 aufweist, der als ringförmiges Wandsegment einer Kanalwandung 66 ausgebildet ist. Diese besondere Ausgestaltung der Leiteinrichtung 64 erlaubt unterschiedliche Herstellungsverfahren eines entsprechend ausgestatteten Armaturengehäuses.

Wie in den **Fign. 15 bis 17** dargestellt, kann die Leiteinrichtung 64 unter Anwendung der 2K-Technologie in einem Spritzgießwerkzeug dadurch hergestellt werden, dass zunächst ein erster Gehäuseabschnitt 67 eines Armaturengehäuses 68 hergestellt wird und anschließend in einem zweiten Schritt die Leiteinrichtung 64 als zweiter Abschnitt des Armaturengehäuses 68 an den ersten Abschnitt 67 angespritzt wird.

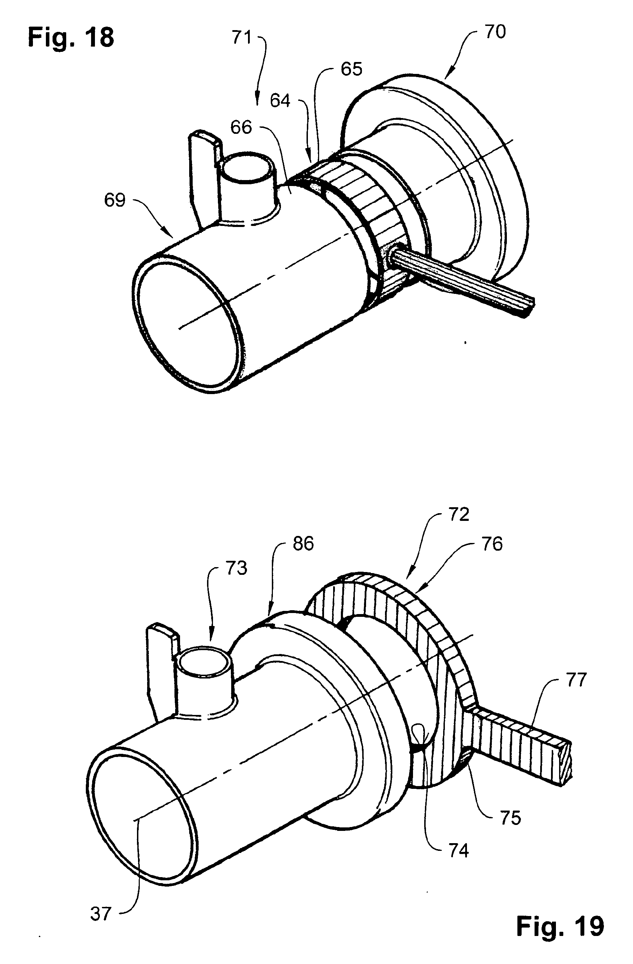

Alternativ ist es auch möglich, wie durch die Darstellung in **Fig. 18** angedeutet, zunächst zwei Gehäuseabschnitte 69, 70 eines Armaturengehäuses 71 herzustellen und anschließend die Leiteinrichtung 64, entsprechend der Darstellung in **Fig. 18**, koaxial zwischen den Gehäuseabschnitten 69, 70 zu positionieren, um eine stoffschlüssige Verbindung zwischen der Leiteinrichtung 64 und den Gehäuseabschnitten 69, 70 in einem Schweißverfahren herzustellen.

**Fig. 19** zeigt in einer weiteren Ausgestaltung eine Leiteinrichtung 72, die durch eine Schweißverbindung stoffschlüssig mit einem Armaturengehäuse 73 verbindbar ist. **Fig. 19** zeigt die Leiteinrichtung 72 unmittelbar vor der Verschweißung mit einem rückwärtigen Anschlussende 86 des Armaturengehäuses 73. Nach Herstellung der stoffschlüssigen Verbindung zwischen der Leiteinrichtung 72 und dem Armaturengehäuse 73 bildet die Leiteinrichtung 72 einen Schweißflansch zur Verbindung mit dem in **Fig. 1** dargestellten Entleerstutzen 12 des Innenbehälters 2. Die Leiteinrichtung 72 weist einen kreisringförmig ausgebildeten Segmentkörper 74 auf mit einer der Längsachse 37 des Armaturengehäuses 71 zugewandten Kontaktoberfläche 74 und einer äußeren Anschlussoberfläche 75, an der als integraler Fortsatz des Segmentkörpers 76 ein Erdungsleiter 77 ausgebildet ist.

## Patentansprüche

1. Entnahmearmatur (13), insbesondere Klappen- oder Kugelhahn, mit einem Armaturengehäuse (18, 68, 71, 73, 81) aus Kunststoff zum Anschluss an einen Entleerstutzen (12) eines Flüssigkeitsbehälters aus Kunststoff, insbesondere eines Innenbehälters (2) eines Transport- und Lagerbehälters (1), wobei das Armaturengehäuse mit einer zumindest teilweise aus einem elektrisch leitfähigem Kunststoff bestehenden elektrischen Leiteinrichtung (25, 34, 47, 56, 64, 72, 78) zur Ableitung einer elektrostatischen Aufladung versehen ist, wobei die Leiteinrichtung sowohl einen integral ausgebildeten Erdungsleiter (27, 45, 54, 77, 79) zur elektrisch leitfähigen Verbindung der Leiteinrichtung mit einem Erdungspotential aufweist als auch integral mit dem Armaturengehäuse verbunden ist,
**dadurch gekennzeichnet,**
**dass** ein Segmentkörper (26) der Leiteinrichtung (25) ein Wandsegment einer einen Durchflusskanal des Armaturengehäuses (18) definierenden Kanalwandung (28) ausbildet, mit einer exponiert auf einer Innenseite (29) der Kanalwandung angeordneten Kontaktfläche (30) des Segmentkörpers, der mit einer Anschlussfläche (31), an die der Erdungsleiter (27) stoffschlüssig angeschlossen ist, in einer äußeren Oberfläche der Kanalwandung angeordnet ist.

2. Entnahmearmatur nach Anspruch 1,
**dadurch gekennzeichnet,**
**dass** die Leiteinrichtung (34) einen ringförmigen Segmentkörper (40) aufweist, der derart in einer Kanalwandung (35) angeordnet ist, dass die Anschlussfläche (44) an der Außenseite (46) der Kanalwandung angeordnet ist und eine Vielzahl radial verteilt angeordneter, Kontaktflächen (42) ausbildende Kontaktfortsätze (41) die Kanalwandung durchdringen.

3. Entnahmearmatur nach Anspruch 1,
**dadurch gekennzeichnet,**
**dass** die Leiteinrichtung (47) einen ringförmigen Segmentkörper aufweist, der in einem ringförmigen Rezess (50) einer Kanalwandung (49) angeordnet ist, derart, dass die Anschlussfläche (53) auf einem Boden (55) des Rezesses angeordnet ist und der Erdungsleiter (54) die Kanalwandung nach außen durchdringt.

4. Entnahmearmatur nach Anspruch 1,
**dadurch gekennzeichnet,**
**dass** die Leiteinrichtung (56, 64) mit ihrem Segmentkörper (57, 65) einen Wandabschnitt einer Kanalwandung (58, 56) ausbildet.

5. Entnahmearmatur nach Anspruch 4,
**dadurch gekennzeichnet,**
**dass** der Segmentkörper (65) ringförmig ausgebildet ist.

6. Entnahmearmatur nach Anspruch 5,
**dadurch gekennzeichnet,**
**dass** der Segmentkörper (65) als Übergangstuck zwischen zwei Gehäuseabschnitte (69, 70) des Armaturcngehäuses (71) ausgebildet ist.

7. Entnahmearmatur nach Anspruch 5,
**dadurch gekennzeichnet,**
**dass** der Segmentkörper (65) als ein stoffschlüssiger Fortsatz eines Anschlussendes (86) des Armaturengehäuses (73) ausgebildet ist.

8. Entnahmearmatur nach Anspruch 7,
**dadurch gekennzeichnet,**
**dass** der Fortsatz einen Anschlussflansch zur Schweißverbindung des Armaturengehäuses (73) mit dem Entleerstutzen (12) des Flüssigkeitsbehälters bildet.

9. Transport- und Lagerbehälter (1) für Flüssigkeiten, mit einem Innenbehälter (2) aus Kunststoff mit einem verschließbaren Einfüllstutzen (9) und einem Entleerstutzen (12) zum Anschluss einer Entnahmearmatur (13), einem Auβenmantel (14) aus Metall sowie einem als Transportpalette ausgebildeten Untergestell (17), das zur Handhabung mittels Hubstapler, Regatbediengerät o.dgl. Transportmittel eingerichtet ist, wobei an den Entleerstutzen des Innenbehälters eine Entnahmearmatur nach einem der Ansprüche 1 bis 8 angeschlossen ist.

## Claims

1. A tapping armature (13), in particular a flap valve or ball valve, having an armature housing (18, 68, 71, 73, 81) made of plastic for the connection to a draining neck (12) of a fluid container made of plastic, in particular an inner container (2) of a transport and storage container (1), wherein the armature housing is provided with an electric conducting device (25, 34, 47, 56, 64, 72, 78) consisting at least partially of an electrically conductive plastic material for discharging an electrostatic charge, the conducting device having an integrally formed grounding conductor (27, 45, 54, 77, 79) for the electrically conductive connection of the conducting device to a ground potential and being integrally connected to the armature housing,
**characterized in that**
a segment body (26) of the conducting device (25) forms a wall segment of a channel wall (28) defining a flow channel of the armature housing (18), with a contact surface (30) of the segment body arranged exposed on an inner side (29) of the channel wall, which segment body is arranged in an outer surface of the channel wall with a connecting surface (31) to which the grounding conductor (27) is connected in a bonded manner.

2. The tapping armature according to claim 1,
**characterized in that**
the conducting device (34) comprises an annular segment body (40) which is arranged in a channel wall (35) in such a manner that the connecting surface (44) is arranged on the outer side (46) of the channel wall and a plurality of contact extensions (41) arranged radially spread out and forming contact surfaces (42) penetrate the channel wall.

3. The tapping armature according to claim 1,
**characterized in that**
the conducting device (47) comprises an annular segment body which is arranged in an annular recess (50) of a channel wall (49) in such a manner that the connecting surface (53) is arranged on a bottom (55) of the recess and the grounding conductor (54) penetrates the channel wall to the outside.

4. The tapping armature according to claim 1,
**characterized in that**
the conducting device (56, 64) with its segment body (57, 65) forms a wall section of a channel wall (58, 56).

5. The tapping armature according to claim 4,
**characterized in that**
the segment body (65) is formed annular.

6. The tapping armature according to claim 5,
**characterized in that**
the segment body (65) is formed as a transition portion between two housing sections (69, 70) of the armature housing (71).

7. The tapping armature according to claim 5,
**characterized in that**
the segment body (65) is formed as a bonded extension of a connecting end (86) of the armature housing (73).

8. The tapping armature according to claim 7,
**characterized in that**
the extension forms a connecting flange for the welded connection of the armature housing (73) to the draining neck (12) of the container for liquids.

9. A transport and storing container (1) for liquids, having an inner container (2) made of plastic with a closable filler neck (9) and a draining neck (12) for the connection of a tapping armature (13), an outer mantle (14) made of metal and a base frame (17) formed as a transport pallet which is adapted for handling by stacker truck, storage and retrieval device or similar transport means, wherein a tapping armature according to any of the claims 1 to 8 is connected to the draining neck of the inner container.

## Revendications

1. Armature de robinet (13), en particulier une vanne de fermeture ou un robinet à boisseau sphérique, ayant un boîtier d'armature (18, 68, 71, 73, 81) en matière plastique pour la connexion à une tubulure d'écoulement (12) d'une cuve de liquide en plastique, en particulier d'une cuve intérieure (2) d'une cuve de transport et stockage (1), le boîtier d'armature étant pourvu d'un dispositif de conduction électrique (25, 34, 47, 56, 64, 72, 78) se composant au moins en partie d'une matière plastique électroconductrice pour décharger une charge électrostatique, le dispositif de conduction comprenant un conducteur de terre (27, 45, 54, 77, 79) formé intégralement pour la connexion électroconductrice du dispositif de conducteur à un potentiel de terre, et étant connecté intégralement au boîtier d'armature,
**caractérisée en ce qu'**
un corps de segment (26) du dispositif de conduction (25) forme un segment de mur d'un mur de canal (28) définissant un canal d'écoulement du boîtier d'armature (18), avec une surface de contact (30) du corps de segment arrangée exposée sur un côté intérieur (29) du mur de canal, ledit corps de segment étant arrangé avec une surface de connexion (31) à une surface extérieure du mur de canal, le conducteur de terre (27) étant connecté par liaison de matière à ladite face de connexion.

2. Armature de robinet selon la revendication 1,
**caractérisée en ce que**
le dispositif de conduction (34) comprend un corps de segment (40) annulaire qui est arrangé dans un mur de canal (35) de telle manière que la surface de connexion (44) soit arrangée sur le côté extérieur (46) du mur de canal, et une pluralité de prolongements de contact (41) disposés radialement dispersés et formant des surfaces de contact (42) pénètrent le mur de canal.

3. Armature de robinet selon la revendication 1,
**caractérisée en ce que**
le dispositif de conduction (47) comprend un corps de segment annulaire qui est arrangé dans un évidement (50) annulaire d'un mur de canal (49) de telle manière que la surface de connexion (53) soit arrangée sur un fond (55) de l'évidement et le connecteur de terre (54) pénètre le mur de canal vers l'extérieur.

4. Armature de robinet selon la revendication 1,
**caractérisée en ce que**
le dispositif de conduction (56, 64) avec son corps de segment (57, 65) forme une section de mur d'un mur de canal (58, 56).

5. Armature de robinet selon la revendication 4,
**caractérisée en ce que**
le corps de segment (65) est formé annulaire.

6. Armature de robinet selon la revendication 5,
**caractérisée en ce que**
le corps de segment (65) est formé sous forme d'une partie de transition entre deux sections de boîtier (69, 70) du boîtier d'armature (71).

7. Armature de robinet selon la revendication 5,
**caractérisée en ce que**
le corps de segment (65) est formé sous forme d'un prolongement par liaison de matière d'une extrémité de connexion (86) du boîtier d'armature (73).

8. Armature de robinet selon la revendication 7,
**caractérisée en ce que**
le prolongement forme une bride de connexion pour le raccord par soudage du boîtier d'armature (73) à la tubulure d'écoulement (12) de la cuve de liquide.

9. Cuve de transport et stockage (1) pour liquides, ayant une cuve intérieure (2) en matière plastique avec une tubulure de remplissage (9) fermable et une tubulure d'écoulement (12) pour la connexion d'une armature de robinet (13), un manteau extérieur (14) en métal et un cadre de base (17) formé sous forme de palette de transport qui est adapté à être manipulé par gerbeur, transstockeur ou des moyens de transport semblables, dans lequel une armature de robinet selon l'une quelconque des revendications 1 à 8 est connectée à la tubulure d'écoulement de la cuve intérieure.
